# EUROPÄISCHE PATENTSCHRIFT

(11) **EP 0 330 019 B1**
(45) Veröffentlichungstag und Bekanntmachung des Hinweises auf die Patenterteilung: **06.12.1995**
(21) Anmeldenummer: 89102230.3
(22) Anmeldetag: 09.02.1989
(51) Int. Cl.: C08L 23/10, C08K 3/26, H01B 3/44

(54) **Rohstoff und daraus hergestellte Folie mit verbesserten elektrischen Eigenschaften**
Raw materials and films with enhanced electrical properties made thereof
Matière première et pellicule préparée à partir de cette matière, à propriétés électriques

(30) Priorität: 19.02.1988 DE 3805165
(43) Veröffentlichungstag der Anmeldung: 30.08.1989
(73) Patentinhaber: HOECHST AKTIENGESELLSCHAFT, 65926 Frankfurt am Main (DE)
(72) Erfinder: Schlögl, Gunter, Dr., D-6233 Kelkheim (DE); Bothe, Lothar, Dr., D-6500 Mainz-Gonsenheim (DE); Crass, Günther, D-6204 Taunusstein 4 (DE); Wilhelm,Thomas, Dr., D-7519 Sulzfeld (DE); Helf, Karl-Eduard, D-6200 Wiesbaden (DE)

(56) Entgegenhaltungen:
- EP-A- 0 000 084
- EP-A- 0 011 796
- EP-A- 0 212 486

## Beschreibung

Die vorliegende Erfindung bezieht sich auf eine biaxial orientierte Folie aus Rohstoff auf Basis von Polyolefinen. Die Erfindung bezieht sich ferner auf einen Rohstoff, der zur Herstellung dieser Folie geeignet ist, und auf die Verwendung einer Folie der genannten Art. Die Folie ist zur Verwendung als Elektroisolierfolie geeignet.

Der Einsatz von Kunststoffolien als Elektroisoliermaterial ist seit langem bekannt. Diese Folien werden sowohl als Dielektrikum in Kondensatoren als auch für Kabelisolierungen oder als selbstklebende Isolierbänder verwendet. Die Anforderungen an die elektrischen Eigenschaften solcher Folien sind sehr hoch. Sie sollen einen möglichst niedrigen dielektrischen Verlustfaktor und eine möglichst hohe Durchschlagfestigkeit aufweisen, wobei eine zeitliche Konstanz dieser Kenndaten gefordert wird, insbesondere auch bei erhöhten Temperaturen, wie sie bei der bestimmungsgemäßen Verwendung dieser Folien auftreten. Sofern die Folien, nach Aufbringen einer Metallschicht, in MKP-Kondensatoren verwendet werden, ist eine gute Haftung zwischen Folienoberfläche und Metall notwendig.

Bisher wurde versucht, die gewünschten Eigenschaften durch Verwendung hochreiner Rohstoffe zu erreichen, die einen sehr niedrigen Restaschegehalt von möglichst kleiner als 100 ppm besitzen und weitgehend frei sind von Gleitmitteln und ionogenen Bestandteilen. Der Einsatz von Rohstoffen auf Basis von Propylenpolymeren mit dieser hohen Reinheit zur Herstellung von biaxial orientierten Elektroisolierfolien ist beispielsweise aus den EP-Anmeldungen 0 011 796 und 0 222 296 bekannt geworden.

Allerdings weisen selbst hochreine Rohstoffe von Polyolefinen noch einen Restgehalt an Katalysatorrückständen auf, die zwangsläufig durch das Herstellungsverfahren bedingt sind. Solche Katalysatorbestandteile sind insbesondere Verbindungen auf Basis von Aluminium, Titan, Magnesium und Chlor. Bei Verwendung des Rohstoffs zur Herstellung von Elektroisolierfolien müssen die im Rohstoff vorhandenen bzw. entstehenden aktiven Chlorverbindungen neutralisiert werden, was in der Praxis durch Zugabe von Calciumstearat geschieht.

Die Verwendung von Calciumstearat als Neutralisationsmittel führt jedoch gegenüber dem unneutralisierten Material zu einem deutlichen Ansteigen des dielektrischen Verlustfaktors der Elektroisolierfolie, insbesondere wenn sie bei erhöhten Temperaturen eingesetzt wird. Darüber hinaus sinkt die durch eine Koronabehandlung hervorgerufene Adhäsionswirkung der Folienoberfläche gegenüber Metallen wie Aluminium oder Zink, mit denen Kondensatorfolien beschichtet sind, in unerwünschter Weise. Hierfür ist vermutlich die Migration der Umsetzungsstoffe der Neutralisationsreaktion an die Folienoberfläche im Laufe der Zeit verantwortlich. Die Folge ist eine verringerte Haftung der Metallschicht und Metallablösung. Ein weiterer Nachteil ist das Ausdampfen der bei der Neutralisationsreaktion aus Calciumstearat entstehenden Stearinsäure, die bei der Folienproduktion und Folienverarbeitung zu unerwünschten Ablagerungen an Maschinenteilen führt. Diese Ablagerungen können als wachsartlge Tropfen auf die Elektroisolierfolie herabfallen und dadurch ihre Qualität erheblich verschlechtern.

Die EP-A-0 212 486 beschreibt eine Polyolefin-Formmasse aus einem Homo- oder Copolymerisat eines 1-Olefins mit 2 bis 10 Kohlenstoffatomen und 0,01 bis 0,2 Gew.-% CaCO₃-Teilchen mit einer Teilchengröße von kleiner 10 »m, mit einer mittleren Teilchengröße von kleiner 0,1 »m, mit einer spezifischen Oberfläche von größer 40 m²/g und mit einem Weißgrad von größer 90 %. Die Formmasse kann weiterhin übliche Zusatzstoffe enthalten. Beim Verarbeiten der Formmasse auf Maschinen treten weniger Korrosion an den Maschinen und keine Ablagerungen auf. Die hergestellten Formkörper haben eine gute Farbqualität.

Aufgabe der vorliegenden Erfindung ist es daher, eine zur Verwendung als Elektroisolierfolie geeignete biaxial orientierte Folie aus hochreinem Elektrofolienrohstoff auf Basis von Polyolefinen, insbesondere Propylenpolymeren, anzugeben, welche die genannten Nachteile nicht aufweist. Die Folie dieser Art soll insbesondere eine verbesserte Haftung zwischen Folienoberfläche und Metallschicht und verbesserte elektrische Eigenschaften im Hinblick auf ihre Verwendung als Elektroisolierfolie aufweisen. Hierzu gehört ein möglichst geringer dielektrischer Verlustfaktor der Folie bei ihrem Gebrauch, insbesondere bei Hitzebelastung. Ein weiteres Ziel der Erfindung besteht darin, die Gefahr der Bildung von Wachsflecken auf der Folienoberfläche während der Folienherstellung und Folienverarbeitung auszuschalten.

Eine zusätzliche Aufgabe der Erfindung liegt darin, einen Rohstoff zur Herstellung einer Folie mit diesen Eigenschaften bereitzustellen.

Diese Aufgabe wird überraschenderweise gelöst durch die in Anspruch 1 angegebene Folie, ihre Verwendung nach Anspruch 10 und 11 sowie durch den zur Herstellung der Folie geeigneten Rohstoff mit den in Anspruch 12 genannten Merkmalen. Die abhängigen Ansprüche 2 bis 8 geben bevorzugte Ausführungsformen der Folie an.

Die Folie besteht aus einem hochreinen Elektrofolienrohstoff, der frei von Gleitmitteln ist und keine ionogenen Bestandteile enthält. Sein Restaschegehalt vor Zugabe des Neutralisationsmittels ist kleiner als 100, insbesondere kleiner als 50 ppm, sein Chlorgehalt kleiner als 50, insbesondere gleich/kleiner als 20 ppm und sein Gehalt an Neutralisationsmittel, d.h. an Carbonatteilchen, sollte 0,5 Gew.-%, jeweils bezogen auf das Gesamtgewicht der Folie, nicht übersteigen. Der Mindestanteil des Neutralisationsmittels hängt vom Chlorgehalt im Rohstoff ab und beträgt gewöhnlich mindestens 0,005 Gew.-%. Als maximaler Gewichtsanteil an Calciumcarbonat sind im allgemeinen 0,1, insbesondere 0,05 Gew.-% ausreichend. Die absolute Teilchengröße sollte 10, insbesondere 8 Mikrometer nicht übersteigen, da größere Teilchen zur Bildung von Stippen und Blasen, sogenannten Fischaugen, führen, die wegen der darin eingeschlossenen Luft die elektrischen, aber auch die optischen Eigenschaften verschlechtern. Es ist besonders vorteilhaft, wenn die absolute Teilchengröße die Foliendicke nicht überschreitet, da sonst diese Teilchen aus der Folienoberfläche herausragen. Aus diesem Grund ist es auch zweckmäßig, Carbonat-Teilchen mit einem möglichst geringen mittleren Teilchendurchmesser einzusetzen, wobei eine obere Grenze von 0,1, insbesondere 0,07 Mikrometer nicht überschritten werden sollte. Als geeignete Teilchen kommen insbesondere Carbonate der Alkali- und Erdalkalimetalle in Betracht. Calciumcarbonat-Teilchen sind besonders bevorzugt, sie bestehen z.B. aus natürlichem Gesteinspulver, z.B. aus Kalkspat, Kalkstein oder Kreide, sofern sie nicht durch andere Stoffe zu stark verunreinigt sind.

Vorzugsweise werden jedoch durch Fällung erzeugte Carbonat-Teilchen eingesetzt, welche einen ausreichenden Weißgrad besitzen, so daß eine Vergilbung der Folie mit Sicherheit verhindert wird. Der Weißgrad der Carbonat-Teilchen sollte mindestens 90, insbesondere 95 %, betragen. Er wird gemessen nach DIN 53163. Es ist für eine gute Neutralisationswirkung außerdem zweckmäßig, Carbonat-Teilchen mit einer relativ großen spezifischen Oberfläche zu verwenden. Sie sollte mindestens 30, insbesondere mindestens 40 m²/g, betragen (gemessen nach der BET-Methode).

Als bevorzugtes Propylenpolymeres zur Herstellung der Folie wird ein Propylenhomopolymerisat mit einem hohen isotaktischen Anteil, insbesondere von mehr als 90 %, bevorzugt mehr als 95 % eingesetzt. Der isotaktische Anteil wird dabei aus der Masse des Polymeren abzüglich der Masse des n-heptanlöslichen Anteils bestimmt. Ebenfalls erfindungsgemäß ist die Verwendung eines Mischpolymerisats, das zum überwiegenden Anteil aus Propyleneinheiten zusammengesetzt ist. Weitere Einheiten des Propylenmischpolymerisats bestehen aus Olefinen, insbesondere mit 2 bis 6 C-Atomen. Geeignete Mischpolymerisate des Propylens sind beispielsweise Blockcopolymere oder statistische Copolymere des Propylens mit C₂- oder C₄-Olefinen, insbesondere mit Ethylen. Der Anteil der Propylen-Einheiten im Mischpolymerisat liegt gewöhnlich bei mindestens 90 Gew.-%. Geeignet ist ferner eine Polymermischung, die überwiegend, vorzugsweise zu mindestens 75 %, aus isotaktischem Propylenhomopolymerisat und dem Mischpolymerisat und/oder aus anderen Polyolefinen, insbesondere mit 2 bis 6 C-Atomen, besteht. Geeignete Polyolefine in der Polymermischung sind insbesondere HDPE, LDPE, LLDPE und Poly-4-methyl-penten-1, wobei der Anteil dieser Polyolefine jeweils 15 Gew.-%, bezogen auf die Polymermischung, gewöhnlich nicht übersteigt.

Der Folienrohstoff enthält zweckmäßigerweise einen oder mehrere Stabilisatoren aus den Stoffklassen der sterisch gehinderten Phenole, Phosphite, Thioether und Phosphonite, wobei die ersten beiden Stoffklassen besonders bevorzugt sind. Eine umfassende Zusammenstellung von geeigneten Stabilisatoren für Polypropylen wird von T.J. Henmann in der Publikation "World Index of Polyolefine Stabilizers", Kogan Page Ltd., London, 1982, gegeben. Besonders geeignete Stabilisatoren werden in der EP-A-0 222 296 beschrieben. Diese Verbindungen werden gewöhnlich in einer Menge bis zu 1, vorzugsweise bis zu 0,5, Gew.-% in der Folie eingesetzt und führen zu einer Verringerung von Oxidationserscheinungen und damit zu einer besseren Zeitkonstanz des dielektrischen Verlustfaktors und der elektrischen Durchschlagfestigkeit der Folie bei ihrer Verwendung in einem Kondensatorwickel.

Eine erfindungsgemäße Folie kann sowohl als Monofolie als auch als coextrudierte Folie aus mehreren Schichten hergestellt werden, wobei diese Schichten aus dem gleichen oder aus verschiedenen Propylenpolymeren bestehen. Vorzugsweise sind bei der aus mehreren Schichten aufgebauten Folie die Carbonat-Teilchen gleichmäßig in allen Schichten verteilt.

Die erfindungsgemässe Folie hat eine Dicke im Bereich von 3 bis 30 »m, insbesondere 4 bis 15 »m.

Zur Herstellung der erfindungsgemäßen Folie wird die Schmelze durch eine Flachdüse extrudiert bzw. mehrere Schmelzen coextrudiert, die erhaltene Folie durch Abkühlen verfestigt, anschließend bei einer Temperatur von 120 bis 150° C im Verhältnis 5:1 bis 7:1 längsgestreckt und bei einer Temperatur von 160° C bis 170° C im Verhältnis 8:1 bis 10:1 quergestreckt. Zuletzt wird die biaxial gestreckte Folie bei 150° C bis 160° C thermofixiert.

Die Erfindung wird durch die nachfolgenden Beispiele näher erläutert.

Zur Herstellung von einschichtigen biaxial orientierten Folien wird eine Schmelze von Propylenhomopolymerisat mit einem isotaktischen Anteil von etwa 96 %, einem Restaschegehalt vor Zugabe des Neutralisationsmittels von 95 ppm, einem Chlorgehalt von 20 ppm und einem Stabilisatorgehalt von 0,1 % durch eine Flachdüse extrudiert. Der Stabilisator ist 1,3,5-Trimethyl-2, 4,6-tris (3,5-di-tert.-butyl-4-hydroxybenzyl)benzol. Die erhaltenen Folien haben eine Dicke von etwa 10 Mikrometer. Nach einer Coronabehandlung wird ihr dielektrischer Verlustfaktor tan δ bei 1 kHz (120° C) mit einer Meßbrücke der Firma Gen Rad GmbH, München, gemessen.

Die Folien unterscheiden sich durch ihren Gehalt an Calciumcarbonat-Teilchen, nämlich 0,1 %; 0,2 %; 0,3 % und 0,5 %. Der Weißgrad der Teilchen ist 95 %, ihre absolute Größe kleiner als 8 Mikrometer, ihr mittlerer Durchmesser 0,02 Mikrometer und ihre spezifische Oberfläche 100 m²/g. Die Teilchen wurden durch Fällung erzeugt.

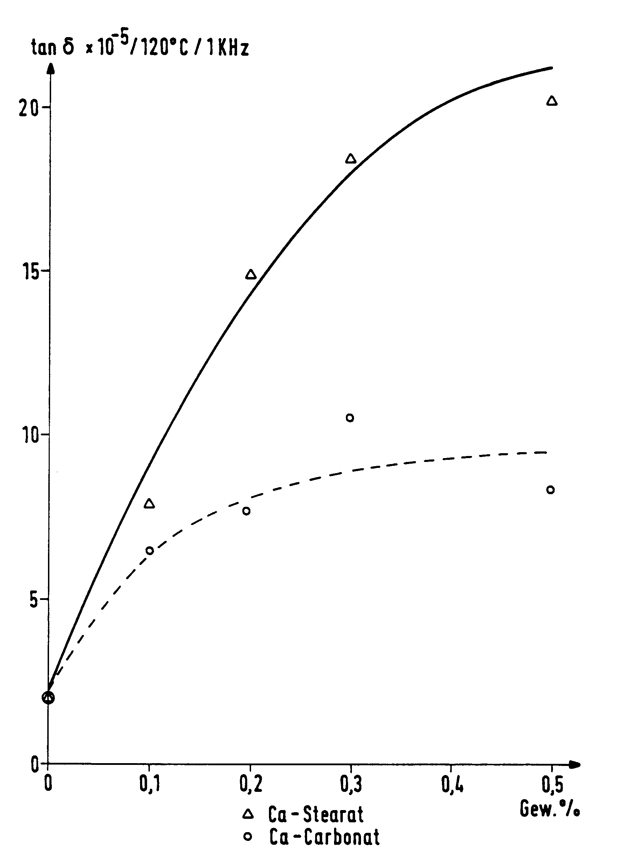

Eine analog hergestellte Vergleichsfolie hat weder Calciumcarbonat- noch Calciumstearat-Gehalt, weitere analog hergestellte Vergleichsfolien besitzen jeweils die gleiche Menge Calciumstearat, nämlich 0,1 %, 0,2 %, 0,3 % und 0,5 %. Die Veränderung von tan δ in Abhängigkeit vom jeweiligen Gehalt an Calciumcarbonat und Calciumstearat ist in der Figur dargestellt. Es zeigt sich, daß der dielektrische Verlustfaktor tan δ mit zunehmendem Calciumcarbonatgehalt weit niedrigere Werte beibehält als bei gleich großem Gehalt an Calciumstearat.

Jeweils eine Probe der Folien mit 0,05 Gew.-% Calciumcarbonat und Calciumstearat werden mit einem Klebebandtest auf die Güte der Haftung einer Metallschicht auf ihrer Oberfläche untersucht. Hierzu wird eine Schicht aus Aluminium im Hochvakuum mit einer Dicke von etwa 0,3 Mikrometer aufgedampft. Auf die Metallschicht wird ein Klebeband geklebt, das langsam abgezogen wird. Die Menge des abgezogenen Metalls aus der Metallschicht wird visuell beurteilt. Hierbei zeigt nur die Folie mit Calciumcarbonatgehalt praktisch keinen Metallabzug, während sich bei der Folie mit Calciumstearatgehalt ein Metallabzug feststellen läßt. Die Adhäsionseigenschaft der erfindungsgemäßen Folie zur Metallschicht ist somit deutlich verbessert.

Bei der Herstellung aller Folien mit Calciumcarbonatgehalt sind keine störenden Ablagerungen im Querstreckrahmen zu beobachten. Demgegenüber treten insbesondere bei den Vergleichsbeispielen mit zunehmendem Calciumstearatgehalt Ablagerungen von Stearinsäure im Querstreckrahmen auf, die z.T. auf die Folienbahn tropfen und als störende Wachsablagerungen die Qualität der Folie beeinträchtigen. Der Einsatz der erfindungsgemäß hergestellten Folie erfolgt sowohl in KP- (Film-Folien-Kondensatoren) als auch in MKP-Kondensatoren (Kondensatoren aus metallisierter Polypropylenfolie), bevorzugt in Kondensatoren für solche Anwendungen, bei denen eine hohe zeitliche Konstanz der elektrischen und dielektrischen Kennwerte auch bei erhöhten Temperaturen gefordert wird.

## Patentansprüche

1. Biaxial orientierte Folie aus Rohstoff auf Basis von Polyolefin, dadurch gekennzeichnet, daß der Rohstoff vor Zugabe von Alkali- und/oder Erdalkalicarbonat einen Restaschegehalt von kleiner als 100 ppm und einen Chlorgehalt von kleiner als 50 ppm aufweist und daß der Rohstoff Alkali- und/oder Erdalkalicarbonat mit einer absoluten Teilchengröße ≦10 »m und einem mittleren Teilchendurchmesser von ≦0,1 »m in einer Menge von maximal 0,5 Gew.-%, bezogen auf das Gesamtgewicht der Folie, enthält.

2. Folie nach Anspruch 1, dadurch gekennzeichnet, daß die Alkalicarbonat- und/oder Erdalkalicarbonatteilchen eine absolute Teilchengröße von ≦8 »m und einen mittleren Teilchendurchmesser von ≦0,07 »m aufweisen.

3. Folie nach Anspruch 1 oder 2, dadurch gekennzeichnet, daß die spezifische Oberfläche der Alkalicarbonat- und/oder Erdalkalicarbonatteilchen ≧30 m²/g, vorzugsweise ≧40 m²/g, (gemessen nach der BET-Methode) ist.

4. Folie nach einem oder mehreren der Ansprüche 1 bis 3, dadurch gekennzeichnet, daß der Weißgrad der Alkalicarbonat- und/oder Erdalkalicarbonatteilchen ≧90 %, vorzugsweise ≧95 %, (gemessen nach DIN 53163) ist.

5. Folie nach einem oder mehreren der Ansprüche 1 bis 4, dadurch gekennzeichnet, daß der Rohstoff auf Basis von Polyolefinen aus Propylenmischpolymerisat mit überwiegenden Propyleneinheiten und vorzugsweise weiteren Olefineinheiten oder aus einer Mischung mit einem überwiegenden Anteil von Propylenhomopolymerisat und geringen Anteilen von Propylenmischpolymerisat und/oder anderen Olefinhomo- oder Olefinmischpolymerisaten besteht.

6. Folie nach einem oder mehreren der Ansprüche 1 bis 5, dadurch gekennzeichnet, daß die Folie eine Dicke von 3 bis 30 »m, vorzugsweise 4 bis 15 »m, aufweist.

7. Folie nach einem oder mehreren der Ansprüche 1 bis 6, dadurch gekennzeichnet, daß sie einschichtig oder mehrschichtig aufgebaut ist und die Alkalicarbonat- und/oder Erdalkalicarbonatteilchen in der/den Schichten gleichmäßig verteilt sind.

8. Folie nach Anspruch 7, dadurch gekennzeichnet, daß sie mehrschichtig ist und die einzelnen Schichten der Folie coextrudiert sind.

9. Folie nach einem oder mehreren der Ansprüche 1 bis 8, dadurch gekennzeichnet, daß sie eine zusätzliche Metallschicht aufweist.

10. Verwendung einer Folie nach einem oder mehreren der Ansprüche 1 bis 9 in einem Kondensator.

11. Verwendung einer Folie nach einem oder mehreren der Ansprüche 1 bis 9 als Elektroisolierfolie, vorzugsweise als Dielektrikum in einem elektrischen Folienkondensator.

12. Verwendung eines Rohstoffes auf Basis von Polyolefin, der Alkalicarbonat und/oder Erdalkalicarbonat enthält, zur Herstellung von Folien, dadurch gekennzeichnet, daß der Rohstoff vor Zugabe von Alkali- und/oder Erdalkalicarbonat einen Restaschegehalt von kleiner 100 ppm aufweist und dessen Chlorgehalt kleiner als 50 ppm ist und daß die Alkali- und/oder Erdalkalicarbonatteilchen eine absolute Teilchengröße ≦10 »m und einen mittleren Teilchendurchmesser ≦0,1 »m aufweisen.

## Claims

1. A biaxially oriented film composed of raw material based on polyolefin, wherein, before the addition of alkali metal carbonate and/or alkaline earth metal carbonate, the raw material has a residual ash content of less than 100 ppm and a chlorine content of less than 50 ppm, and wherein the raw material contains alkali metal carbonate and/or alkaline earth metal carbonate having an absolute particle size ≦10 »m and a mean particle diameter of ≦0.1 »m in an amount of at most 0.5 % by weight, relative to the total weight of the film.

2. A film as claimed in claim 1, wherein the alkali metal carbonate and/or alkaline earth metal carbonate particles have an absolute particle size of ≦8 »m and a mean particle diameter of ≦0.07 »m.

3. A film as claimed in claim 1 or 2, wherein the specific surface area of the alkali metal carbonate and/or alkaline earth metal carbonate particles is ≧30 m²/g, preferably ≧40 m²/g (measured by the BET method).

4. A film as claimed in one or more of claims 1 to 3, wherein the degree of whiteness of the alkali metal carbonate and/or alkaline earth metal carbonate particles is ≧90 %, preferably ≧95 % (measured according to DIN 53163).

5. A film as claimed in one or more of claims 1 to 4, wherein the raw material based on polyolefins is composed of a propylene copolymer with predominantly propylene units and preferably further olefin units or of a mixture with a predominant proportion of propylene homopolymer and small proportions of the propylene copolymer and/or other olefin homopolymers or olefin copolymers.

6. A film as claimed in one or more of claims 1 to 5, which has a thickness of 3 to 30 »m, preferably 4 to 15 »m.

7. A film as claimed in one or more of claims 1 to 6, which is of a single-ply or multi-ply structure, the alkali metal carbonate and/or alkaline earth metal carbonate particles being uniformly distributed in the ply or plies.

8. A film as claimed in claim 7, which is multi-ply and the individual plies of which are co-extruded.

9. A film as claimed in one or more of claims 1 to 8, which comprises an additional metal layer.

10. The use of a film as claimed in one or more of claims 1 to 9 in a capacitor.

11. The use of a film as claimed in one or more of claims 1 to 9 as an electrical insulating film, preferably as a dielectric in an electrical foil capacitor.

12. The use of a raw material based on polyolefin and containing an alkali metal carbonate and/or alkaline earth metal carbonate, for the production of films, wherein, before the addition of the alkali metal carbonate and/or alkaline earth metal carbonate, the raw material has a residual ash content of less than 100 ppm and its chlorine content is less than 50 ppm, and wherein the alkali metal carbonate and/or alkaline earth metal carbonate particles have an absolute particle size ≦10 »m and a mean particle diameter ≦0.1 »m.

## Revendications

1. Pellicule orientée biaxialement, constituée d'une matière première à base de polyoléfine, caractérisée en ce que la matière première présente, avant l'addition d'un carbonate alcalin et/ou d'un carbonate alcalino-terreux, une teneur en cendres résiduelles inférieure à 100 ppm et une teneur en chlore inférieure à 50 ppm, et en ce que la matière première contient un carbonate alcalin et/ou un carbonate alcalino-terreux ayant une taille absolue de particules ≦10 »m et un diamètre moyen de particules ≦0,1 »m, en une proportion d'au maximum 0,5 % en poids, par rapport au poids total de la pellicule.

2. Pellicule selon la revendication 1, caractérisée en ce que les particules de carbonate alcalin et/ou de carbonate alcalino-terreux présentent une taille absolue de particules ≦8 »m et un diamètre moyen de particules ≦0,07 »m.

3. Pellicule selon la revendication 1 ou 2, caractérisée en ce que la surface spécifique des particules de carbonate alcalin et/ou de carbonate alcalino-terreux est ≧30 m²/g, de préférence ≧40 m²/g (mesurée selon la méthode BET).

4. Pellicule selon une ou plusieurs des revendications 1 à 3, caractérisée en ce que le degré de blancheur des particules de carbonate alcalin et/ou de carbonate alcalino-terreux est ≧90 %, de préférence ≧95 % (mesuré selon DIN 53163).

5. Pellicule selon une ou plusieurs des revendications 1 à 4, caractérisée en ce que la matière première à base de polyoléfines consiste en un copolymère de propylène comportant des motifs propylène prépondérants et de préférence d'autres motifs oléfiniques, ou en un mélange comportant une proportion prépondérants d'homopolymère de propylène et de faibles proportions de copolymère de propylène et/ou d'autres homopolymères d'oléfine ou copolymères d'oléfines.

6. Pellicule selon une ou plusieurs des revendications 1 à 5, caractérisée en ce que la pellicule présente une épaisseur de 3 à 30 »m, de préférence de 4 à 15 »m.

7. Pellicule selon une ou plusieurs des revendications 1 à 6, caractérisée en ce qu'elle est constituée d'une ou plusieurs couches et les particules de carbonate alcalin et/ou de carbonate alcalino-terreux sont réparties uniformément dans la(les) couche(s).

8. Pellicule selon la revendication 7, caractérisée en ce qu'elle est multicouche et les couches individuelles de la pellicule sont coextrudées.

9. Pellicule selon une ou plusieurs des revendications 1 à 8, caractérisée en ce qu'elle présente une couche métallique supplémentaire.

10. Utilisation d'une pellicule selon une ou plusieurs des revendications 1 à 9, dans un condensateur.

11. Utilisation d'une pellicule selon une ou plusieurs des revendications 1 à 9, en tant que pellicule d'isolation électrique, de préférence en tant que diélectrique dans un condensateur électrique à feuilles.

12. Utilisation d'une matière première à base de polyoléfine, qui contient un carbonate alcalin et/ou un carbonate alcalino-terreux, pour la fabrication de pellicules, caractérisée en ce que la matière première présente, avant l'addition de carbonate alcalin et/ou de carbonate alcalino-terreux, une teneur en cendres résiduelles inférieure à 100 ppm, et sa teneur en chlore est inférieure à 50 ppm, et en ce que les particules de carbonate alcalin et/ou de carbonate alcalino-terreux présentent une taille absolue de particules ≦10 »m et un daimètre moyen de particules ≦0,1 »m.
